# EUROPÄISCHE PATENTSCHRIFT

(11) **EP 2 085 848 B1**
(45) Veröffentlichungstag und Bekanntmachung des Hinweises auf die Patenterteilung: **09.03.2011**
(21) Anmeldenummer: 08001825.2
(22) Anmeldetag: 31.01.2008
(51) Int. Cl.: G05B 19/418

(54) **Bearbeitungseinrichtung und Bearbeitungsverfahren zur Bearbeitung von Objekten mittels Zeitmessung**
Processing device and processing method for processing objects through time measurement
Dispositif de traitement et procédé de traitement destinés au traitement d'objets à l'aide d'une mesure temporelle

(43) Veröffentlichungstag der Anmeldung: 05.08.2009
(73) Patentinhaber: Homag Holzbearbeitungssysteme AG, 72296 Schopfloch (DE)
(72) Erfinder: Hils, Winfried, 72250 Freudenstadt (DE); Moritz, Frank, 79102 Freiburg (DE); Tritschler, Markus, 79395 Neuenburg (DE)
(74) Vertreter: HOFFMANN EITLE

(56) Entgegenhaltungen:
- EP-A- 1 659 465
- WO-A-99/14645
- US-A- 5 463 296
- US-A- 5 887 029

## Beschreibung

### TECHNISCHES GEBIET

Die vorliegende Erfindung betrifft eine Bearbeitungseinrichtung und ein Bearbeitungsverfahren zur Bearbeitung von bewegten Objekten, und insbesondere eine Bearbeitungseinrichtung und ein Bearbeitungsverfahren für eine kontinuierliche Vermessung und Bearbeitung bewegter Objekte in einer Durchlaufmaschine mittels Weg-/Zeitmessung in verteilten Systemen.

### STAND DER TECHNIK

Vorrichtungen und Verfahren, bei denen ein auf einer Fördereinrichtung befindliches Objekt entlang einer Bearbeitungsstrecke geführt wird, das an einer bestimmten Position erfasst wird und bei einer anderen Position bearbeitet wird, werden im Allgemeinen als Durchlaufmaschinen bzw. Durchlaufverfahren bezeichnet.

Hierbei werden Werkstücke, hier als Objekte bezeichnet, wie zum Beispiel steifes Plattenmaterial, wie Vollholz- bzw. Spanplatten, sogenannte Tischlerplatten, Sperrholzplatten, Verbundplatten aus Holz, Kunststoff oder Metall oder dergleichen auf einer Fördereinrichtung erfasst und daraufhin eine Bearbeitung an denselben durchgeführt.

Natürlich kann bei solch einer Durchlaufbearbeitung nicht nur ein Bearbeitungsvorgang an den Objekten ausgeführt werden, sondern verschiedene Bearbeitungen sind möglich, wie zum Beispiel Schneiden, Fräsen, Schleifen, Bohren, etc. Ferner ist es auch möglich, andere Teile auf die Objekte, wie zum Beispiel Werkstücke, aufzubringen bzw. aufzukleben oder aufzuschrauben.

So kann beispielsweise bei einem automatisierten Ablauf einer Werkstückbearbeitung, das Werkstück an mehrere Bearbeitungsstationen mittels einer Fördereinrichtung mit Band- oder Kettenförderer geführt werden, ohne dass Personen in den Arbeitsablauf eingreifen müssen.

Hierbei ist es äußerst wichtig, dass die genaue Position des Werkstücks auf der Fördereinrichtung immer genau bekannt ist, so dass eine darauf folgende Bearbeitung auch an der richtigen Stelle des Werkstücks ausgeführt wird.

Herkömmlich sind Durchlaufmaschinen mit einer Werkstückerfassung und einem Wegmesssystem ausgestattet, deren Signale einer Steuereinheit zur Verarbeitung zugeführt werden. Im Einlaufbereich der Fördereinrichtung kann dabei ein Werkstück erfasst werden, und ein entsprechendes Signal ausgegeben werden. Da ferner die ungefähre Geschwindigkeit des Transportbandes oder der Transportkette, z.B. durch Messung des zurückgelegten Weges bei verschiedenen Zeitpunkten, ermittelt werden kann, kann dadurch die ungefähre Position des Werkstückes in der Durchlaufmaschine ermittelt werden.

Durch Positionierung von Sensoren an der Fördereinrichtung kann somit auch ein Signal ausgegeben werden, das kennzeichnet, dass die Ankunft eines Werkstückes bzw. Objekts bei einem Sensor gemessen wird, was der Position des Werkstückes entspricht. Daraufhin kann einem nachgeschalteten Aktor befohlen werden, zu schalten oder sich zu bewegen, so dass nach einer bestimmten zurückgelegten Strecke des Werkstücks vom Sensor dieses durch den Aktor bearbeitet wird. Somit ist eine kontinuierliche Bearbeitung von Werkstücken in mehreren Bearbeitungsstationen ohne menschliches Eingreifen möglich. Ein Sensor meldet daher, z.B. durch ein Trigger-Signal, dass er gemessen hat und einem Aktor wird befohlen, z.B. durch ein Trigger-Signal, dass er schalten bzw. sich bewegen soll.

Aus der obigen Beschreibung wird klar, dass die Anzahl der bearbeiteten Teile stark von der Geschwindigkeit der Fördereinrichtung abhängt, das heißt, durch Verdoppeln der Geschwindigkeit lässt sich auch der Durchsatz verdoppeln.

Jedoch werden Störeinflüsse auf die Position des Werkstücks gravierender und eine Präzision geringer, je höher die Geschwindigkeit ist. Störeinflüsse sind zum Beispiel die Reaktion der Steuerung, der Schlupf bei Vorschub des Werkstücks, Toleranzen im Vorschubtransport und bei der Werkstückerfassung, die sich nur innerhalb gewisser Präzisionsgrenzen erfassen lassen.

EP 1 659 465 A2 betrifft ein Bewegungssteuerungsnetzwerkprotokoll mit Zeitstempel. Ein System wird beschrieben, das das Steuern einer Bewegung in einem Netzwerk ermöglicht und eine Schnittstelle und eine Bewegungssteuerkomponente mit Taktgeber umfasst. Beispielsweise können ein Controller und ein Drive über ein Ethernet-basiertes Netzwerk kommunizieren, wobei das Drive physikalische Eigenschaften messen kann und der Controller Befehle erzeugen kann. Bewegungsbezogene Daten können einen Zeitstempel enthalten, der im Zusammenhang steht mit einer Zeit, zu der eine Messung getätigt wurde und/oder einer Zeit, zu der die Daten ausgeführt werden sollen.

US 5 887 029 betrifft ein Verfahren zur Ablaufplanung bei räumlich getrennten Steuerereignissen mit einem Industriecontroller. Eine aufeinander abgestimmte Systemzeit wird erstellt für räumlich getrennte Komponenten eines Steuersystems unter Verwendung von synchronisierenden Nachrichten, die übertragen werden über eine Kommunikationsverbindung. Genau koordinierte Aktionen können bei getrennten Komponenten durch Verwendung einer Zeit erhalten werden. Die Systemzeit kann zum Zeitstempeln von empfangenen Triggerereignissen verwendet werden. Beispielsweise kann gewünscht werden, dass eine Aktion nach einem festen Intervall nach einem Triggerereignis ausgeführt wird, wobei das Prozessormodul keine vorherige Information darüber hat, wann die Aktion durchgeführt werden soll, sondern nur ein festes Intervall.

### ZUSAMMENFASSUNG DER ERFINDUNG

Somit ist es eine Aufgabe der vorliegenden Erfindung, eine Durchlaufmaschine und ein Bearbeitungsverfahren für eine Durchlaufmaschine bereitzustellen, um eine Präzision in der Bestimmung von Position und Länge von sich bewegenden Objekten zu verbessern, ohne dass eine Durchlaufgeschwindigkeit der Objekte reduziert werden muss.

Dies wird durch die Merkmale der unabhängigen Patentansprüche erreicht.

Gemäß einer Ausführungsform umfasst die Bearbeitungseinrichtung eine Steuereinheit mit Zeitgeber zum Ausgeben einer Systemzeit und mindestens zwei mit der Steuereinheit verbundene Maschineneinheiten ausgebildet zum Empfangen der Systemzeit, wobei die erste Maschineneinheit mindestens ein Sensorelement umfasst und ausgebildet ist zum Erfassen eines Ereignisses und zum Ausgeben einer Ereigniszeit basierend auf der Systemzeit, die mit der Erfassung des Ereignisses in Beziehung steht, und die zweite Maschineneinheit mindestens ein Aktorelement umfasst, und ausgebildet ist zum Durchführen eines Betriebs gemäß einer von der Steuereinheit vorgegebenen Bearbeitungszeit, basierend auf der Systemzeit und der Ereigniszeit. Somit gibt eine erste Maschineneinheit mit Sensorelement, wie zum Beispiel ein Sensor, genau an, wann und wo sie gemessen hat und eine zweite Maschineneinheit mit Aktorelement, wie zum Beispiel ein Aktor, kann angewiesen werden zu welchem Zeitpunkt sie einen Betrieb aufnehmen soll. Dadurch kann eine exakte Lage eines Objekts in der Zeit genau erfasst werden und über mindestens eine Steuerung anderen Maschineneinheiten mitgeteilt werden. Dadurch werden eine wesentlich genauere Erfassung eines Objekts und eine wesentliche genauere Ansteuerung von Maschineneinheiten mit Aktorelementen zur Bearbeitung von Objekten ermöglicht, und durch einfaches Arbeiten im Zeitbereich Signalwandlungen eingespart. Hierbei hängt die Präzision in solch einem System nicht von der Laufzeit der Kommunikationsleitungen und Feldbussen zwischen den Komponenten oder der Zykluszeit der Steuerung ab, sondern nur von der Auflösung der Systemszeit, das heißt, der Synchronisierungsgenauigkeit der Maschineneinheiten untereinander.

Eine Bearbeitungseinrichtung im Sinne der Erfindung ist jedes System, das verteilte Zeiten besitzt, und wo die Zeit eines Auftretens eines Ereignisses, wie zum Beispiel das Erfassen eines Objektes, von einer Einheit zu einer anderen gesendet werden kann, danach verarbeitet werden kann und dann als Bearbeitungszeit nach einem Ereigniszeitpunkt die Durchführung eines Betriebs angeben kann. Somit ist die Bearbeitungseinrichtung insbesondere für eine Durchlaufmaschine geeignet, muss aber nicht notwendigerweise ein Teil einer Durchlaufmaschine sein, da auch Fälle denkbar sind, bei denen ein erstes Objekt erfasst wird, aber ein Betrieb an einem zweiten Objekt durchgeführt wird, das nicht zusammen mit dem ersten Objekt auf einer Fördereinrichtung liegen muss.

Gemäß einem vorteilhaften Beispiel ist die erste Maschineneinheit ausgebildet das Ereignis mit der auf der Systemzeit basierenden Ereigniszeit als Erfassungssignal an die Steuereinheit auszugeben. Somit wird die Steuereinheit der Bearbeitungseinrichtung über die Ereigniszeit informiert, die auf der Systemzeit basiert, und kann andere Maschineneinheiten mit derselben Systemzeit anweisen, einen Betrieb durchzuführen.

Gemäß einem vorteilhaften Beispiel berechnet die Steuereinheit die Bearbeitungszeit, basierend auf der Ereigniszeit, wobei bevorzugt die berechnete Bearbeitungszeit als Bearbeitungssignal an die zweite Maschineneinheit ausgegeben wird. Deshalb muss eine Steuereinheit kein exaktes Trigger-Signal an die zweite Maschineneinheit zu einem bestimmten Bearbeitungszeitpunkt ausgeben, sondern es genügt, vor dem Bearbeitungszeitpunkt eine Bearbeitungszeit zu berechnen und diese der zweiten Maschineneinheit vorher mitzuteilen, so dass die zweite Maschineneinheit zur vorgegebenen Zeit selbst den Betrieb aufnimmt. Hierdurch wird eine genauere Ansteuerung des Aktorelements der zweiten Maschineneinheit ermöglicht.

Gemäß einem weiteren vorteilhaften Beispiel umfasst die Bearbeitungseinrichtung eine dritte Maschineneinheit mit einem zweiten Sensorelement und eine vierte Maschineneinheit mit einem zweiten Aktorelement, wobei die dritte und vierte Maschineneinheit ausgebildet sind, die Systemzeit von der Steuereinheit zu empfangen, und die Steuereinheit ausgebildet ist, basierend auf dem Ereignis und der Ereigniszeit, die Maschineneinheit mit Aktorelement auszuwählen, der die Bearbeitungszeit mitzuteilen ist. Da die Maschineneinheiten mit Aktorelement nur über die Bearbeitungszeit informiert werden und nicht beim Bearbeitungszeitpunkt von der Steuereinheit getriggert werden, kann die Bearbeitungszeit zu einem willkürlichen Zeitpunkt vor dem Bearbeitungszeitpunkt gesendet werden, so dass keine Engpässe auf einer Kommunikationsleitung oder Feldbus entstehen, und eine exakte Ansteuerung aufgrund der gleichen Zeit in den Maschineneinheiten gewährleistet wird.

Gemäß einem weiteren vorteilhaften Beispiel, bilden die erste und zweite Maschineneinheit ein Bearbeitungsaggregat, das bevorzugt eine Aggregatsteuereinheit umfasst. Somit kann die Signalverarbeitung zwischen der Steuereinheit und der Aggregatsteuereinheit aufgeteilt werden, wodurch die Steuereinheit entlastet wird.

Gemäß einem weiteren vorteilhaften Beispiel ist die Aggregatsteuereinheit ausgebildet, mit der Steuereinheit über ein Bussystem zu kommunizieren, und über das Bussystem die Systemzeit zu empfangen. Somit kann die Systemzeit von der Steuereinheit an eine Aggregatsteuereinheit ausgegeben werden, die ferner die daran angeschlossenen Maschineneinheiten mit der Systemzeit versorgt, so dass ohne weitere Kommunikationsleitungen zur Steuereinheit die Bearbeitungseinrichtung durch weitere Maschineneinheiten an der Aggregatsteuereinheit erweitert werden kann.

Gemäß einem weiteren vorteilhaften Beispiel synchronisiert die Steuereinheit die Maschineneinheiten. Dadurch muss eine Systemzeit nur einmal von einer Steuereinheit ausgegeben werden, da diese Zeit in den einzelnen Maschineneinheiten durch ein einfaches Synchronisierungssignal zu späteren Zeitpunkten synchronisiert werden kann.

Gemäß einem weiteren vorteilhaften Beispiel umfasst die erste Maschineneinheit einen ersten Speicher zum Speichern von Ereignissen und Ereigniszeiten. Somit muss ein erfasstes Ereignis und/oder Ereigniszeit nicht sofort an eine Steuereinheit weitergegeben werden, sondern kann in der Maschineneinheit zwischengespeichert werden, so dass auch zwei oder mehr Ereignisse und/oder Ereigniszeiten zusammen an eine Steuereinheit gesendet werden können.

Gemäß einem weiteren vorteilhaften Beispiel umfasst die zweite Maschineneinheit einen zweiten Speicher zum Speichern von Bearbeitungszeiten. Durch Speichern mehrere Bearbeitungszeiten können verschiedene Betriebe zu verschiedenen Bearbeitungszeiten, wie im Speicher festgelegt, nacheinander ohne weitere Kommunikation mit einer Steuereinheit abgearbeitet werden.

Gemäß einem weiteren vorteilhaften Beispiel entspricht die Systemzeit der realen Weltzeit. Durch Verwenden der realen Weltzeit kann gewährleistet werden, dass auch zwei weit voneinander entfernte Maschineneinheiten, die jeweils die Weltzeit empfangen, dieselbe Zeit haben, wobei eine Ereigniszeit an ein größeres Netzwerk ausgegeben werden kann, und eine Bearbeitungszeit von einem größeren Netzwerk, wie zum Beispiel dem Internet, erhalten und weiter übertragen werden kann.

Gemäß einer anderen Ausführungsform ist die Bearbeitungseinrichtung in einer Durchlaufmaschine enthalten. Somit lassen sich die oben beschriebenen Vorteile auch bei einer Durchlaufmaschine erzielen.

Gemäß einem weiteren vorteilhaften Beispiel umfasst die Durchlaufmaschine einen Objektsensor zum Erfassen eines Objekts auf einer Fördereinrichtung und zum Ausgeben eines Objekt-Erfassungssignals enthaltend eine Objekt-Erfassungszeit, basierend auf der Systemzeit. Somit kann die exakte Position eines Objekts zu einem bestimmten Zeitpunkt ermittelt und leicht an andere Maschineneinheiten gesandt werden.

Gemäß einem weiteren vorteilhaften Beispiel umfasst die Durchlaufmaschine einen Lagegeber zum Ausgeben eines Messsignals entsprechend einer Messung einer Position einer Fördereinrichtung an die Steuereinheit, wobei das Messsignal eine Messzeit, basierend auf der Systemzeit enthält, die mit der Messung in Beziehung steht, und wobei die Steuereinheit bevorzugt ausgebildet ist, eine Position eines Objekts auf der Fördereinrichtung zu unterschiedlichen Zeiten zu berechnen durch Verwenden des Messsignals und des Erfassungssignals oder des Objekt-Erfassungssignals. Durch Messen der Position der Fördereinrichtung zu kurz aufeinander folgenden Messzeiten lässt sich die Geschwindigkeit der Fördereinrichtung ermitteln und durch mehrere Messungen auch deren Schwankung, so dass die Position eines Objekts zu verschiedenen Zeiten auf der Fördereinrichtung ermittelt werden kann. Ferner kann die Geschwindigkeitsinformation in der Steuereinheit zur Berechnung der Bearbeitungszeit verwendet werden.

Gemäß einer anderen Ausführungsform, umfasst ein Bearbeitungsverfahren ein Ausgeben einer definierten Systemzeit von einer Steuereinheit mit Zeitgeber an mindestens zwei Maschineneinheiten, ein Erfassen eines Ereignisses mit der ersten Maschineneinheit, ein Ausgeben einer Ereigniszeit, basierend auf der Systemzeit, die mit der Erfassung des Ereignisses in Beziehung steht, von der ersten Maschineneinheit an die Steuereinheit, und Durchführen eines Betriebs gemäß einer von der Steuereinheit vorgegebenen Bearbeitungszeit, basierend auf der Systemzeit und der Ereigniszeit durch die zweite Maschineneinheit. Insbesondere ist das Verfahren dazu geeignet in einer Durchlaufmaschine ausgeführt zu werden. Somit lässt sich ein einfaches und verlässliches Verfahren für eine präzise Positionsbestimmung für Objekte in einer Durchlaufmaschine verwirklichen.

Weitere vorteilhafte Merkmale der Erfindung werden in den Ansprüchen offenbart.

### KURZE BESCHREIBUNG DER ZEICHNUNGEN

- Fig. 1: zeigt schematisch eine Bearbeitungseinrichtung gemäß einer Ausführungsform der Erfindung.
- Fig. 2: zeigt ein Flussdiagramm, das die Schritte eines Bearbeitungsverfahrens gemäß einer weiteren Ausführungsform der Erfindung zeigt.
- Fig. 3: zeigt eine Durchlaufmaschine mit der Bearbeitungseinrichtung gemäß einer weiteren Ausführungsform der Erfindung.
- Fig. 4: zeigt ein Abfolgediagramm der Schritte in einer Durchlaufmaschine gemäß einer beispielhaften Ausführungsform der vorliegenden Erfindung.

### AUSFÜHRLICHE BESCHREIBUNG BEVORZUGTER AUSFÜHRUNGSFORMEN

Bevorzugte Ausführungsformen der vorliegenden Erfindung werden nachfolgend ausführlich unter Bezugnahme auf die begleitenden Zeichnungen beschrieben. Dabei sind in verschiedenen Zeichnungen gleiche oder entsprechende Bauteile jeweils mit den gleichen oder ähnlichen Bezugszeichen bezeichnet.

Die bevorzugten Ausführungsformen der Erfindung, die im Detail unten beschrieben werden, werden ausführlich mit Bezug auf eine Bearbeitungseinrichtung und eine Durchlaufmaschine beschrieben. Jedoch wird bemerkt, dass die folgende Beschreibung nur Beispiele enthält und nicht als die Erfindung einschränkend angesehen werden sollte.

Beispielsweise erkennt der Fachmann, dass in der vorliegenden Erfindung alle Einheiten der Bearbeitungseinrichtung die gleiche Systemzeit besitzen, dies bedeutet, dass die Zeit in den Einheiten überall gleich ist. Deshalb kann nach Erfassung eines Ereignisses bei einer ersten Maschineneinheit eine zweite Maschineneinheit bestimmt werden, die einen Befehl mit einer Zeitvorgabe nach der Erfassung des Ereignisses bekommt, um dann irgendeinen Betrieb auszuführen.

Es sei hier bemerkt, dass der Betrieb nicht notwendigerweise an einem Objekt ausgeführt werden muss, das das Ereignis bei der ersten Maschineneinheit ausgelöst hat. Es ist auch denkbar, dass es sich bei dem Auslösen dieses Ereignisses um ein anderes Objekt handelt. So kann zum Beispiel ein erstes Objekt ein Ereignis zu einer genau erfassbaren Zeit, der Ereigniszeit, auslösen, wodurch die zweite Maschineneinheit eine Bearbeitungszeit empfängt, zu der ein Betrieb an beispielsweise einer zweiten Maschineneinheit durchzuführen ist. Dabei muss der Zeitunterschied zwischen der Ereigniszeit und der Bearbeitungszeit nur so groß gewählt werden, dass eine Kommunikation des Befehls zum Durchführen des Betriebs noch rechtzeitig an der zweiten Maschineneinheit ankommen kann, bevor die zweite Maschineneinheit einen Betrieb durchführen soll.

Die Bearbeitungseinrichtung kann, muss aber daher nicht notwendigerweise ein Teil einer herkömmlichen Durchlaufmaschine sein, da sie sich auch für andere Systeme eignet, in denen ein erstes Objekt erfasst wird, aber ein Betrieb an einem zweiten Objekt durchgeführt wird, das nicht zusammen mit dem ersten Objekt auf einer Fördereinrichtung liegen muss. Eine Durchlaufmaschine kann zum Beispiel eine Durchlaufmaschine zur Bearbeitung von plattenförmigen Werkstücken, wie z.B. Vollholz- bzw. Spanplatten, sogenannte Tischlerplatten, Sperrholzplatten, Verbundplatten aus Holz, Kunststoff oder Metall oder dergleichen sein.

Im Folgenden wird, aus Gründen einer einfachen Darstellbarkeit, die vorliegende Erfindung mit Hilfe einer Bearbeitungseinrichtung und einer Durchlaufmaschine beschrieben, wobei eine Bearbeitungseinrichtung für die Durchlaufmaschine eine Steuereinheit mit Zeitgeber umfasst, der eine Systemzeit erzeugt, die ausgegeben wird an mindestens zwei Maschineneinheiten. Somit haben die erste und zweite Maschineneinheit die gleiche Systemzeit, und das Erfassen eines Objekts von der ersten Maschineneinheit kann genau durch eine Ereigniszeit, basierend auf der Systemzeit, definiert werden.

Bei dem Beispiel der Durchlaufmaschine, die Objekte mit gleich bleibender Geschwindigkeit transportiert, kann so aus dem Ort der ersten Maschineneinheit und der Ereigniszeit abgeleitet werden, wann sich dasselbe Objekt bei der zweiten Maschineneinheit befindet. Diese Zeit, im Folgenden als Bearbeitungszeit bezeichnet, wird beispielsweise von der Steuereinheit berechnet und an die zweite Maschineneinheit gesendet, so dass diese das Objekt zu der definierten Bearbeitungszeit bearbeiten kann.

Somit kann eine Position des Objekts genau festgestellt und übermittelt werden, ohne dass eine Steuereinheit Trigger-Signale verarbeiten muss, die angeben, dass ein Sensor gerade gemessen hat, oder ein Aktor jetzt schalten oder sich bewegen soll.

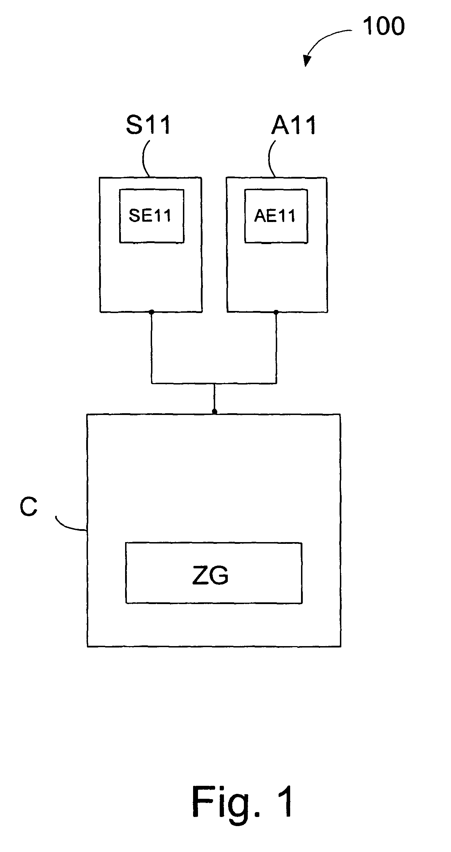

Fig. 1 zeigt schematisch eine Bearbeitungseinrichtung 100. Die Bearbeitungseinrichtung 100 umfasst eine Steuereinheit C mit einem Zeitgeber ZG, eine erste Maschineneinheit S11 mit einem Sensorelement SE11 und eine zweite Maschineneinheit A11 mit einem Aktorelement AE11.

Diese Einheiten können individuelle Einheiten darstellen, die miteinander verbunden sind, oder können auch auf eine passende Art und Weise zusammengefasst werden, wobei zum Beispiel die Steuereinheit in einer der Maschineneinheiten integriert sein kann.

In Fig. 1 sind die Maschineneinheiten S11 und A11 mit der Steuereinheit C verbunden. Die Verbindung erfolgt bevorzugt über ein Bussystem, z.B. ein Feldbus, wobei Profinet ein Standard für industrielles Ethernet oder eine Abwandlung davon zur Ausführung der Erfindung beispielsweise verwendet werden kann. Natürlich ist auch eine drahtlose Verbindung zwischen den Maschineneinheiten und der Steuereinheit C möglich.

Die Steuereinheit C umfasst den Zeitgeber ZG zum Ausgeben einer Systemzeit. Die Steuereinheit C dient zur Steuerung der Bearbeitungseinrichtung 100 und kann beispielsweise eine Bearbeitungszeit, basierend auf der vom Zeitgeber gegebenen Systemzeit, vorgeben.

Die Steuereinheit C kann realisiert werden durch einen Prozessor, Computer oder eine integrierte Schaltung, wie zum Beispiel eine anwendungsspezifische integrierte Schaltung (ASIC) oder durch Software oder eine passende Kombination aus den obigen.

Die erste Maschineneinheit S11 umfasst mindestens ein Sensorelement SE11 und ist ausgebildet zum Erfassen eines Ereignisses und zum Ausgeben einer Ereigniszeit, basierend auf der Systemzeit, die mit der Erfassung des Ereignisses in Beziehung steht. Im einfachsten Fall handelt es sich bei der ersten Maschineneinheit um einen Sensor.

Beispielsweise kann es sich bei dem Ereignis um das Erfassen einer Vorderflanke oder Hinterflanke eines Objekts, zum Beispiel einer Holzplatte, handeln. Die erste Maschineneinheit kann den Ereigniszeitpunkt speichern, der ein Zeitpunkt zu der herrschenden Systemzeit ist und gibt eine Ereigniszeit aus. Bei der ausgegebenen Ereigniszeit muss es sich nicht um den Ereigniszeitpunkt selbst handeln, da es auch einfach möglich ist, Zeit- oder Taktdifferenz auszugeben, die von einem Referenztakt bzw. Referenzuhrzeit gemessen werden. Beispielsweise kann ein Wert von 5 Takten oder 5 Sekunden nach z.B. einer letzten Synchronisierung ausgegeben werden, wobei die Synchronisierung bei allen Einheiten zur gleichen Zeit erfolgt ist.

Das Ereignis kann mit der auf der Systemzeit basierenden Ereigniszeit als Erfassungssignal an die Steuereinheit C ausgegeben werden. Das Erfassungssignal enthält dann eine Information über das Ereignis, wobei eine einfache Angabe wie Ja/Nein genügt, das heißt, Flanke erfasst oder nicht, sowie die Ereigniszeit, die wie oben angegeben, entweder als Absolutzeit angegeben werden kann oder als eine Differenzzeit zu einer Referenzzeit, wie zum Beispiel einem Synchronisierungsvorgang.

Das Sensorelement SE11 in der ersten Maschineneinheit S11 kann ein handelsübliches Sensorelement sein, das in Sensoren in der Automatisierungstechnik verwendet wird. Beispielsweise kann ein optisches Sensorelement verwendet werden, das eine Taktung von beispielsweise 5 kHz aufweist, was ein limitierender Faktor für die Genauigkeit der Messung ist.

Die zweite Maschineneinheit A11 umfasst mindestens ein Aktorelement AE11 und ist ausgebildet zum Durchführen eines Betriebs gemäß einer von der Steuereinheit vorgegebenen Bearbeitungszeit, basierend auf der Systemzeit und der Ereigniszeit. Im einfachsten Fall ist die zweite Maschineneinheit A11 ein Aktor, also das wandlerbezogene Gegenstück zu einem Sensor, der einen Betrieb zu einer vorgegebenen Bearbeitungszeit ausführt. Bei dem Betrieb kann es sich beispielsweise um ein Bearbeiten im Sinne von Stanzen, Lochen, Schneiden, Kleben, Bohren etc. handeln, aber andere Betriebe, wie ein Umleiten, Ausgeben oder Entfernen eines Objekts, das zu der Bearbeitungszeit bei der zweiten Maschineneinheit vorliegt, sind auch denkbar. Das Aktorelement kann z.B. ein Element sein, das solche und ähnliche Funktionen ausführen kann.

Genauer gesagt empfängt die zweite Maschineneinheit A11 die Bearbeitungszeit, die auf der Systemzeit und der Ereigniszeit basiert, und vergleicht die vorgegebene Bearbeitungszeit mit einer Ist-Zeit, der beim Empfang der Bearbeitungszeit herrschenden Systemzeit, die die gleiche ist für alle Einheiten in der Bearbeitungseinrichtung 100 und wartet mit dem Betrieb, bis die vorgegebene Bearbeitungszeit der Systemzeit entspricht. Bei der Bearbeitungszeit kann es sich daher auch, wie mit Bezug auf die Ereigniszeit oben beschrieben, um eine absolute Zeit handeln oder eine relative Zeit, das heißt, um eine von einer Referenzzeit gemessene Zeitdifferenz.

In einer speziellen Ausführungsform ist die Steuereinheit C ausgebildet, basierend auf der Ereigniszeit, die Bearbeitungszeit zu berechnen. Zur Berechnung der Bearbeitungszeit enthält die Steuereinheit C einen Prozessor, Computer oder integrierte Schaltung, wie oben beschrieben, und kann, zum Beispiel bei einer Durchlaufmaschine mit Fördereinrichtung, unter Verwendung der Geschwindigkeit der Fördereinrichtung, bestimmen, wann ein bei der ersten Maschineneinheit S11 erfasstes Objekt bei der zweiten Maschineneinheit ankommt. Diese Ankunftszeit entspricht sodann der Bearbeitungszeit, nämlich der Zeit, zu der ein Objekt von der zweiten Maschineneinheit bearbeitet werden kann. Um dies zu erreichen, ist die Steuereinheit C ausgebildet, die Bearbeitungszeit als Bearbeitungssignal an die zweite Maschineneinheit A11 auszugeben.

Wenn die Bearbeitungszeit erreicht ist, führt die zweite Maschineneinheit dann einen der oben beschriebenen Betriebe aus.

Somit teilt die erste Maschineneinheit S11 nicht mit, dass sie gemessen hat, wie es herkömmlich der Fall ist, sondern wann bzw. was sie wann gemessen hat und gibt die genaue Zeit der Messung aus, die von allen Einheiten in der Bearbeitungseinrichtung verstanden wird, da alle auf der gleichen Systemzeit sind. Der zweiten Maschineneinheit A11 wird nicht mitgeteilt, dass sie jetzt schalten bzw. sich bewegen soll, sondern ihr wird mitgeteilt, wann sie sich wohin bewegen soll durch die vorgegebene Bearbeitungszeit, basierend auf der Systemzeit, die bei allen Einheiten der Bearbeitungseinrichtung 100 gleich ist.

Anstatt eines regelmäßigen Aussendens der Systemzeit, um zu gewährleisten, dass alle Einheiten auf der gleichen Zeit sind, kann es bevorzugt sein, die Maschineneinheiten durch ein einfaches Synchronisierungssignal regelmäßig zu synchronisieren. Dafür kann die Steuereinheit C zum Synchronisieren ausgebildet sein.

Ferner kann die erste Maschineneinheit S11 einen nicht gezeigten ersten Speicher umfassen zum Speichern der Ereignisse und von Ereigniszeiten. Dies kann vor allem für den Fall vorteilhaft sein, dass kurze Objekte mit kurzen Abständen zwischen Vorder- und Hinterflanke oder kurze Abstände zwischen zwei Objekten erfasst und zwischengespeichert werden können, so dass nicht jedes erfasste Ereignis oder Ereigniszeit sofort ausgegeben werden muss, sondern zwischengespeichert werden kann und dann mehrere Ereignisse und/oder ihre Ereigniszeiten auf einmal ausgegeben werden können.

Hierbei muss lediglich gewährleistet werden, dass die Zeit bis zur Übertragung der Ereigniszeit an die Steuereinheit C plus eine Verarbeitungszeit in der Steuereinheit und eine Zeit zum Senden der berechneten Bearbeitungszeit an die zweite Maschineneinheit A11, kürzer ist als die Zeit, die das Objekt braucht, um von der ersten Maschineneinheit S11 zur zweiten Maschineneinheit A11, zum Beispiel auf einer Fördereinrichtung, zu gelangen.

Die zweite Maschineneinheit A11 kann auch einen nicht gezeigten zweiten Speicher umfassen zum Speichern von Bearbeitungszeiten. Somit können, ähnlich zu dem ersten Speicher, mehrere Bearbeitungszeiten und/oder ihre Bearbeitungssollwerte zwischengespeichert werden, die dann je nach Bedarf abgearbeitet werden können. Beispielsweise können drei Bearbeitungszeiten und deren Sollwerte gespeichert werden, so dass, wenn die Systemzeit jeweils eine der Bearbeitungszeiten erreicht, ein dem Sollwert entsprechender Betrieb durchgeführt wird.

Vorteilhaft kann es sich bei der Systemzeit um die reale Weltzeit handeln, das bedeutet, dass alle Einheiten in der Bearbeitungseinrichtung 100 beispielsweise durch ein Funksignal von einer Atomuhr, wie die Atomuhr der Physikalisch-Technischen Bundesanstalt, synchronisiert werden können.

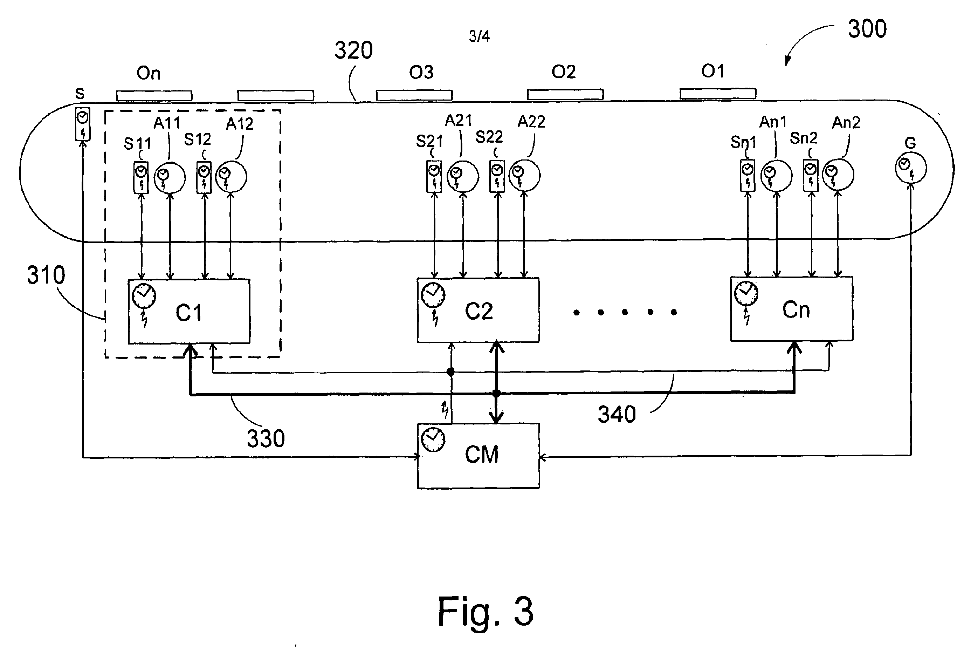

Wie später beschrieben, können die erste und zweite Maschineneinheit ein Bearbeitungsaggregat bilden. Dies bedeutet, dass dann nur eine bidirektionale Kommunikationsleitung zwischen dem Bearbeitungsaggregat und der Steuereinheit C nötig wäre. In einer weiteren Ausführungsform kann das Bearbeitungsaggregat eine Aggregatsteuereinheit umfassen, was später mit Bezug auf Fig. 3 näher beschrieben wird.

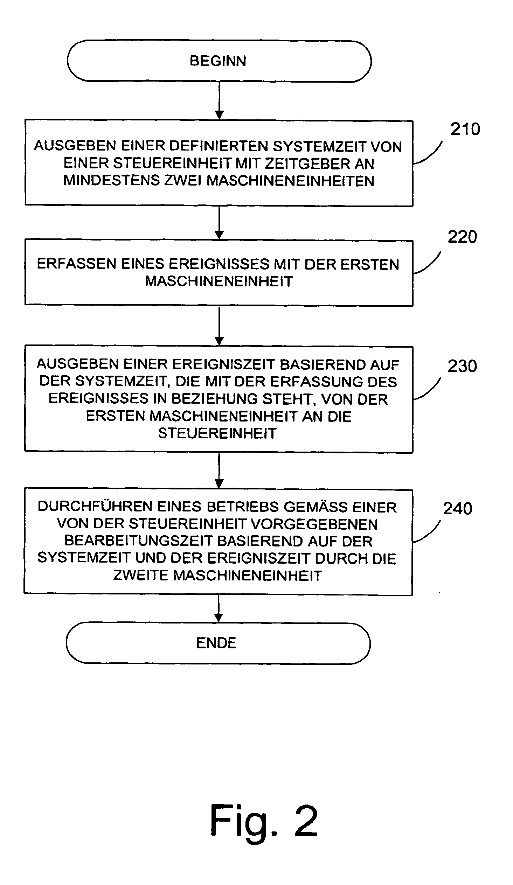

Als nächstes wird in Fig. 2 ein Flussdiagramm beschrieben, das die Schritte eines Bearbeitungsverfahrens für beispielsweise eine Durchlaufmaschine gemäß einer weiteren Ausführungsform der Erfindung zeigt.

Dieses Verfahren kann beispielsweise von der in Fig. 1 gezeigten Bearbeitungsvorrichtung 100 ausgeführt werden.

In einem ersten Schritt 210 wird eine definierte Systemzeit von einer Steuereinheit C mit Zeitgeber ZG an mindestens zwei Maschineneinheiten S11 und A11 ausgegeben. Wie oben beschrieben, kann die Systemzeit die reale Weltzeit sein, wobei nur immer darauf geachtet werden muss, dass die Einheiten des Systems, nämlich Steuereinheit und Maschineneinheiten, die gleiche Zeit anzeigen. Die Systemzeit kann über eine feste Kommunikationsleitung, wie zum Beispiel einem Feldbus, übertragen werden, oder auch drahtlos.

In einem nachfolgenden Schritt 220 wird ein Ereignis mit der ersten Maschineneinheit S11 erfasst. Beispielsweise kann, wie oben beschrieben, ein sich auf einer Fördereinrichtung einer Durchlaufmaschine befindliches Objekt erfasst werden, wenn beispielsweise seine Vorderflanke detektiert wird.

Sodann kann in einem folgenden Schritt 230 die Zeit, die mit der Erfassung des Ereignisses in Beziehung steht, als Ereigniszeit basierend auf der Systemzeit von der ersten Maschineneinheit S11 an die Steuereinheit C ausgegeben werden. Hierbei handelt es sich nicht um ein einfaches Trigger-Signal, das angibt, dass zum Beispiel die Vorderflanke eines Objekts erfasst wurde, sondern um ein Signal mit der genauen Zeit, zu der die Vorderflanke erfasst wurde.

Deshalb muss die Steuereinheit nicht eine Übertragungszeit in einer Kommunikationsleitung von der ersten Maschineneinheit zur Steuereinheit, wie beim Trigger-Signal, in Betracht ziehen, da die übertragene Ereigniszeit sich trotz möglicher Verzögerungen durch eine Kommunikationsleitung nicht ändert. Es muss lediglich sichergestellt werden, dass die Zeit, die die Ereigniszeit zur Steuereinheit braucht, und von der Steuereinheit zu der zweiten Maschineneinheit geringer ist, als die Zeit, die das Objekt von der ersten Maschineneinheit zur zweiten Maschineneinheit braucht.

In dem nächsten Schritt 240 wird ein Betrieb gemäß einer von der Steuereinheit C vorgegebenen Bearbeitungszeit, basierend auf der Systemzeit und der Ereigniszeit, durch die zweite Maschineneinheit durchgeführt. Wie schon oben beschrieben, wird die Bearbeitungszeit, basierend auf der Ereigniszeit und der Systemzeit, bevorzugt durch die Steuereinheit berechnet. Danach wird die Bearbeitungszeit beispielsweise als Bearbeitungssignal von der Steuereinheit C an die zweite Maschineneinheit ausgegeben. Somit wird ein effizientes Verfahren zum akkuraten Vermessen und Bearbeiten von Objekten bereitgestellt.

Als Nächstes wird eine Durchlaufmaschine 300 mit einer darin integrierten Bearbeitungseinrichtung gemäß einer weiteren Ausführungsform der Erfindung mit Bezug auf Fig. 3 beschrieben.

Die in Fig. 3 gezeigte Durchlaufmaschine 300 umfasst mehrere Steuereinheiten C1 bis Cn, mehrere Maschineneinheiten S11, S21 bis Sn1; A11, A21 bis An1; S12, S22 bis Sn2; A12, A22 bis An2, eine Hauptsteuereinheit CM, einen Objektsensor S, einen Lagegeber G, eine Fördereinrichtung 320 und ein Bussystem 330, 340.

In Fig. 3 ist die in Fig. 1 beschriebene Bearbeitungseinrichtung 100 dargestellt durch die Maschineneinheiten S11, A11 und die Steuereinheit C1, die in Fig. 3 als Aggregatsteuereinheit bezeichnet wird zur Unterscheidung von der Hauptsteuereinheit CM. Jedoch können in Fig. 3 Funktionen der Steuereinheit aus Fig. 1 auch von der Hauptsteuereinheit CM übernommen.

Wie oben beschrieben, können die erste und zweite Maschineneinheit auch als Bearbeitungsaggregat 310 aufgefasst werden, das bevorzugt die Aggregatsteuereinheit C1 umfasst. Diese Aggregatsteuereinheit C1 und die Hauptsteuereinheit CM können die Funktionen der in Fig. 1 beschriebenen Steuereinheit C erfüllen.

Natürlich wäre auch in der Durchlaufmaschine von Fig. 3 denkbar, dass die Hautsteuereinheit CM alle Funktionen der Aggregatsteuereinheiten C1, C2 bis Cn übernimmt, die dann nicht nötig wären, jedoch aus rein praktischen Überlegungen hinsichtlich der Verteilung von Verarbeitungsleistung, wird eine, wie in Fig. 3 gezeigte, Anordnung vorgezogen.

Die in Fig. 3 gezeigten Maschineneinheiten mit Sensorelement können beispielsweise Sensoren darstellen und die Maschineneinheiten mit Aktorelement können beispielsweise Aktoren darstellen, wobei die Sensoren und Aktoren ausgebildet sind eine Zeit zu messen, zu senden bzw. zu empfangen, die direkt in den Sensoren bzw. Aktoren verarbeitet werden kann.

Wie in Fig. 3 gezeigt, kann die Bearbeitungseinrichtung auch eine dritte Maschineneinheit S12 mit einem zweiten Sensorelement und eine vierte Maschineneinheit mit einem zweiten Aktorelement A12 umfassen. Die dritte und vierte Maschineneinheit sind auch ausgebildet sein, die Systemzeit von der Steuereinheit bzw. der Hauptsteuereinheit CM durch die Aggregatsteuereinheit C1 zu empfangen.

Die Aggregatsteuereinheit C1 ist ferner ausgebildet, basierend auf dem Ereignis und der Ereigniszeit, die Maschineneinheit mit Aktorelement A11, A12 auszuwählen, der die Bearbeitungszeit mitzuteilen ist.

Herkömmlich wird einem Sensor, zum Beispiel Maschineneinheit S11, ein Aktor, zum Beispiel Maschineneinheit A11, zugewiesen, so dass ein durch die Maschineneinheit S11 erfasstes Ereignis der Maschineneinheit A11 mitgeteilt wird. Jedoch ist es auch möglich, dieses Ereignis der vierten Maschineneinheit A12 mitzuteilen, was basierend auf der Art des Ereignisses durchgeführt werden kann.

Beispielsweise kann, falls es sich bei dem Ereignis um eine Detektion einer Vorderflanke eines Objekts handelt, diese Information für die zweite und vierte Maschineneinheit wichtig sein, wobei bei der zweiten Maschineneinheit beispielsweise ein Loch in das Objekt gebohrt wird und bei der vierten Maschineneinheit dieses Loch mit einem Kleber gefüllt wird.

Die in Fig. 3 gezeigten Aggregatsteuereinheiten C1 bis Cn sind bevorzugt ausgebildet, um mit der Hauptsteuereinheit CM über ein Bussystem 330, 340 zu kommunizieren, und über das Bussystem 330, 340 die Systemzeit zu empfangen.

In Fig. 3 sind zwei Kommunikationsleitungen 330 und 340 gezeigt, wobei eine Systemzeit gesendet wird und bevorzugt auch eine Synchronisierung über die Kommunikationsleitung 340 stattfindet, was auch durch die Pfeilrichtung angedeutet ist. Dabei wird eine Systemzeit, dargestellt durch die Uhr in der Hauptsteuereinheit, übertragen an die Aggregatsteuereinheiten C1 bis Cn. Ferner ist ein Blitzsymbol gezeigt, das darstellt, dass ein Synchronisierungsverfahren die Aggregatsteuereinheiten C1 bis Cn phasensynchron synchronisieren kann.

Die zweite Kommunikationsleitung 330 ist bidirektional ausgebildet und sendet Signale von den Aggregatsteuereinheiten C1 bis Cn zur Hauptsteuereinheit CM und von der Hauptsteuereinheit zu den Aggregatsteuereinheiten. Beispielsweise werden die Erfassungssignale von den Aggregatsteuereinheiten an die Hauptsteuereinheit gesendet, wobei die Hauptsteuereinheit CM Bearbeitungssignale an die Aggregatsteuereinheiten C1 bis Cn senden kann.

Natürlich können die beiden Funktionen der Kommunikationsleitungen 330 und 340 auch in einem einzigen Bussystem integriert werden. Hierbei können auch relativ langsame Feldbusse und unterschiedliche Steuereinheiten verwendet werden, da wie vorher beschrieben, es in der vorliegenden Erfindung nicht auf den genauen Empfang bzw. Aussendung von Trigger-Signalen ankommt, sondern Signale mit einer Zeitvorgabe gesendet und empfangen werden von/an die Maschineneinheiten. Die exakte Lage kann so in der Zeit erfasst werden und über mehrere Feldbusse und unterschiedliche Steuereinheiten übertragen werden.

Zum Beispiel werden an einer Stelle des verteilten Systems, z.B. bei einer der Aggregatsteuereinheiten oder der Hauptsteuereinheit für Daten von dem Lagegeber G, die Daten über die Ermittlung der relativen oder absoluten Zeiten und der entsprechenden Wege verrechnet, die Bearbeitungszeiten und Aktorsollwerte ermittelt und wieder zu unterschiedlichen Steuereinheiten und/oder den über Feldbussen angebundenen Aktoren gesendet.

Im Folgenden wird das Bearbeitungsaggregat 310 als Beispiel für die Aggregatsteuereinheiten C1 bis Cn mit ihren entsprechenden Maschineneinheiten beschrieben.

Wie in Fig. 1 diskutiert, sind die Maschineneinheiten verbunden mit der Steuereinheit C, den Aggregatsteuereinheiten C1 bis Cn in Fig. 3, und können bidirektional miteinander kommunizieren.

In Fig. 3 wird ausgehend von der Hauptsteuereinheit CM die Systemzeit an alle untergelagerten Aggregatsteuereinheiten C1 bis Cn und von diesen weiter an die verbundenen Maschineneinheiten gesandt. Das Bearbeitungsaggregat 310 wird daher immer auf derselben Systemzeit mit den anderen Einheiten der Durchlaufmaschine 300 gehalten. Wie oben diskutiert, kann das Bearbeitungsaggregat mehrere Maschineneinheiten aufweisen, die Sensoren und Aktoren darstellen können.

Zusätzlich zu den Maschineneinheiten mit Sensorelement S11, S12, S21, S22 bis Sn1, Sn2 kann in einer weiteren Ausführungsform die Durchlaufmaschine von Fig. 3 einen Objektsensor S umfassen zum Erfassen eines Objekts 01 bis On auf der Fördereinrichtung 320 und zum Ausgeben eines Objekt-Erfassungssignals enthaltend eine Objekt-Erfassungszeit, basierend auf der Systemzeit. In Fig. 3 wird diese Objekt-Erfassungszeit der Hauptsteuereinheit CM mitgeteilt.
Der Objektsensor S funktioniert ähnlich wie die oben beschriebenen Maschineneinheiten mit Sensorelement, und kann so die Maschineneinheiten und ihre Aggregatsteuereinheiten auf die Ankunft eines Objekts vorbereiten.

Genauer gesagt, werden die Objekte 01 bis On mit möglichst konstanter Geschwindigkeit von der Fördereinrichtung bewegt. Die Geschwindigkeit kann im Bereich von 0,1 m/s bis 20 m/s sein und bevorzugt zwischen 0,5 m/s und 3 m/s. Der Objektsensor S registriert jeweils die positive und/oder negative Schaltflanke eines Objekts und verknüpft dies im Objektsensor mit dem Objekt-Erfassungszeitpunkt, ähnlich wie bei den Maschineneinheiten mit Sensorelement.

Die Durchlaufmaschine kann ferner einen Lagegeber G umfassen zum Ausgeben eines Messsignals entsprechend einer Messung einer Position der Fördereinrichtung 320 an die Hauptsteuereinheit CM, wobei das Messsignal eine Messzeit basierend auf der Systemzeit enthält, die mit der Messung in Beziehung steht.

Im Unterschied zu den Ereigniszeiten und der Objekt-Erfassungszeit, bei denen ein Objekt erfasst werden kann, dient der Lagegeber G dazu die Bewegung der Fördereinrichtung 320 zu messen. Beispielsweise kann der Lagegeber G die Fortbewegung bzw. Drehung der Fördereinrichtung 320 zu mehreren aufeinander folgenden Zeiten messen, wodurch der zurückgelegte Weg in einer bestimmten Zeit gemessen werden kann. Die Lage des Transportbandes der Fördereinrichtung 320 wird bevorzugt in möglichst kleinen Abtastzeiten durch den Lagegeber G zyklisch ermittelt und in Verbindung mit dem Zeitpunkt der Messung verknüpft.

Diese Informationen des Objektsensors S und des Lagegebers G können dann zur Hauptsteuereinheit CM gesendet werden, wo diese Informationen beispielsweise verarbeitet werden können, so dass die Geschwindigkeit der Fördereinrichtung ermittelt werden kann, sowie eine Variierung in der Geschwindigkeit, da die Länge des Wegs sich bei gleichen Zeitabständen unterscheiden kann. Jedoch ist bei großen Fördereinrichtungen mit großer Trägheit eine annähernd konstante Geschwindigkeit anzunehmen.

Wie oben diskutiert, kann die Geschwindigkeit von der Hauptsteuereinheit CM oder den Aggregatsteuereinheiten C1 bis Cn verwendet werden zur Berechnung einer Position eines Objekts auf der Fördereinrichtung zu unterschiedlichen Zeiten. Dabei wird die Geschwindigkeit aus Messsignalen von dem Lagegeber G abgeleitet und mit Hilfe der Ereigniszeit bzw. Objekt-Erfassungszeit, zu der ein Objekt bei einer bestimmten Position war, kann die Position des Objekts in der Zukunft vorhergesagt werden, was wiederum als Bearbeitungszeit an die Maschineneinheiten mit Aktorelement zur Bearbeitung weitergegeben werden kann.

Anders ausgedrückt, verknüpft die Hauptsteuereinheit CM durch einen speziellen Algorithmus die Schaltzeitpunkte der oben beschriebenen Schaltflanke mit dem zu diesem Zeitpunkt herrschenden Wegpunkt des Lagegebers G. Die Ergebnisse der Verknüpfung können den Aggregatsteuereinheiten C1 bis Cn zur Verfügung gestellt werden. Die Steuereinheit, z.B. die Hauptsteuereinheit oder die Aggregatsteuereinheit oder eine Kombination derselben, berechnet dann die Steuerungsaufgaben der einzelnen Maschinenfunktionen und ermitteln so die exakten Schaltwege für die Maschineneinheiten mit Aktorelement.

Um diesen Schaltweg einzuhalten, d.h. immer die korrekte Bearbeitungszeit zu ermitteln, werden z.B. die Geschwindigkeit der.Objekte sowie die Totzeiten der Aktorelemente permanent mit der Systemzeit verrechnet und mit der zu diesem "Sollschaltzeitpunkt" herrschenden Weginformation verknüpft.

Dadurch kann eine exakte Schaltwegaktion generiert werden, und zur Ermittlung der Position werden Zeiten an einer Weginformation gestützt. Wie oben beschrieben, werden unterschiedliche Laufzeiten und Reaktionszeiten der Steuereinheiten, der Maschineneinheiten und des Bussystems durch eine Synchronisierung durch Verteilen der Systemzeit exakt aufeinander abgestimmt.

Die Präzision der Durchlaufmaschine hängt somit nicht notwendigerweise von der Laufzeit der Feldbusse oder der Zykluszeit der jeweiligen Steuereinheiten ab, sondern von einer Veränderung der Transportbandgeschwindigkeit und der Auflösung der Systemzeit in den Maschineneinheiten und dem Lagegeber und Objektsensor, die auch die Systemzeit empfangen und synchronisiert werden können. Es muss lediglich gewährleistet werden, dass die Zeit zwischen der Erfassung von zwei Objekten und der Bearbeitungszeit der beispielsweise zweiten Maschineneinheit größer ist als die Laufzeit der Kommunikation von der ersten Maschineneinheit zur Verarbeitung und zurück zu der zweiten Maschineneinheit.

Durch die mit Bezug auf Fig. 3 beschriebene Ausführungsform lässt sich der Verdrahtungsaufwand im Vergleich zu herkömmlichen Durchlaufmaschinen wesentlich verringern und eine Einsparung von redundanten Sensoren, Querinformation zwischen Steuereinheiten und Signalwandlungen wird ermöglicht. Vor allem jedoch können die Objekte wesentlich genauer erfasst werden und Maschineneinheiten mit Aktorelement können wesentlich genauer angesteuert werden.

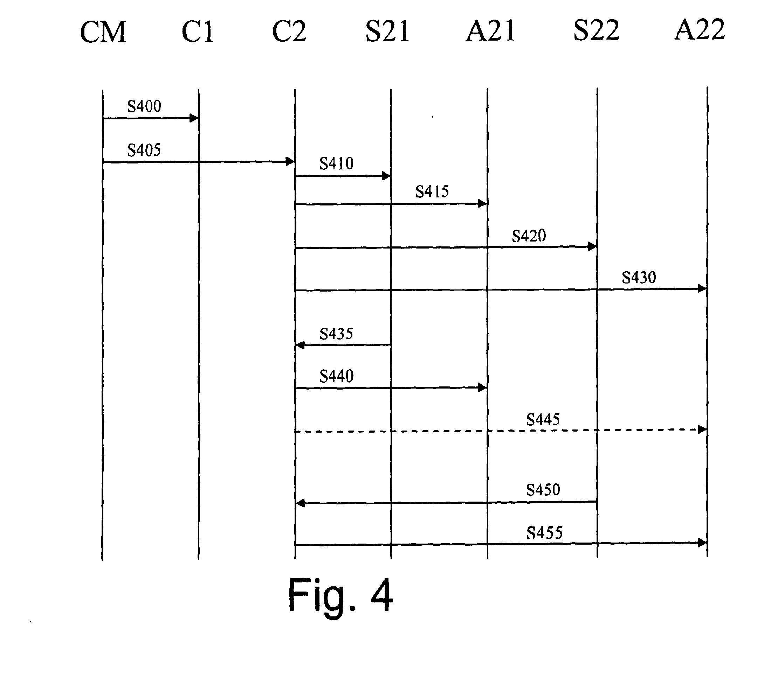

Als Nächstes wird ein Abfolgediagramm der Kommunikationsschritte in der Durchlaufmaschine 300 gemäß einer beispielhaften Ausführungsform mit Bezug auf Fig. 4 beschrieben.

In diesem Beispiel werden nur die Hauptsteuereinheit CM, die Aggregatsteuereinheiten C1 und C2, sowie die Maschineneinheiten S21, A21, S22 und A22 betrachtet.

In diesem Beispiel wird angenommen, dass die Hauptsteuereinheit CM die Systemzeit in den Schritten S400 und S405 an die Aggregatsteuereinheiten C1 und C2 aussendet.

In Fig. 4 sind die Pfeile für die Schritte S400 und S405 mit einem Abstand dargestellt, was jedoch nicht bedeuten muss, dass zwischen diesen beiden Schritten eine Zeitverzögerung auftreten muss. Daher ist es auch möglich, dass die Ausgabe der Systemzeit oder eine Synchronisierung des Systems von allen Aggregatsteuereinheiten gleichzeitig verstanden werden kann.

In dem Beispiel von Fig. 4 wird das Objekt 03 in Fig. 3 betrachtet, das sich auf der Fördereinrichtung 320 vor den Maschineneinheiten der zweiten Aggregatsteuereinheit C2 befindet. Deshalb werden hier die Maschineneinheiten der Aggregatsteuereinheit C2 betrachtet.

Bei den Schritten S410, S415, S420 und S430 wird die Systemzeit oder eine Synchronisierung von der Aggregatsteuereinheit C2 an die Maschineneinheiten S21, A21, S22 und A22 übermittelt. Wie bei den Schritten S400 und S405 kann diese Übermittlung auch gleichzeitig erfolgen und ist in Fig. 4 nur aus Gründen der Lesbarkeit mit Abständen versehen.

Bei der Maschineneinheit S21 in Fig. 3 kann nun das Objekt 03 erfasst werden, was durch Schritt S435 gekennzeichnet ist.

Hierbei wird das entsprechende Erfassungssignal mit der Ereigniszeit zurück an die Aggregatsteuereinheit C2 gesandt, die wiederum selbst eine Bearbeitungszeit berechnen kann, und diese als Bearbeitungssignal in Schritt S440 an die Maschineneinheit A21 senden kann.

Natürlich ist es auch möglich, dass die Hauptsteuereinheit CM diese Bearbeitungszeit berechnet, wobei das Erfassungssignal dann von der Aggregatsteuereinheit C2 zurück zur Hauptsteuereinheit CM gesandt werden müsste, dort berechnet würde und wieder zurück zur Aggregatsteuereinheit C2 gesandt werden müsste. Diese Alternative ist jedoch in Fig. 4 nicht gezeigt, ist jedoch eine weitere Möglichkeit für einen Kommunikationsablauf.

Schritt S445 ist durch einen gestrichelten Pfeil dargestellt, der kennzeichnen soll, dass dieser Schritt optional ist. Dieser Schritt entspricht der oben diskutierten Situation, dass ein Ereignis bei der Maschineneinheit S21 auch eine Bearbeitung in einer weiteren Maschineneinheit mit Aktorelement, zum Beispiel Maschineneinheit A22, hervorrufen kann, so dass zwei verschiedene Bearbeitungszeiten für verschiedene Maschineneinheiten basierend auf der gleichen Ereigniszeit und Systemzeit von der Aggregatsteuereinheit oder Hauptsteuereinheit berechnet werden können.

In Schritt S450 ist dargestellt, dass bei einem weiteren Vorrücken des Objekts 03 die Maschineneinheit S22 das Objekt 03 erfassen kann und eine entsprechende Ereigniszeit zurück an die Aggregatsteuereinheit C2 ausgeben kann. Diese Ereigniszeit kann wiederum in der Aggregatsteuereinheit C2 zur Berechnung einer weiteren Bearbeitungszeit verwendet werden, die in Schritt S455 an die Maschineneinheit A22 gesendet werden kann, so dass die Maschineneinheit A22 zu der vorgegebenen zweiten Bearbeitungszeit einen Betrieb durchführt.

Aus der vorhergehenden Beschreibung erkennt der Fachmann, dass verschiedene Modifizierungen und Variierungen der Bearbeitungseinrichtung, der Durchlaufmaschine und des Bearbeitungsverfahrens der Erfindung durchgeführt werden können, ohne den Umfang der Erfindung zu verlassen.

Ferner wurde die Erfindung mit Bezug auf bestimmte Beispiele beschrieben, die jedoch nur zum besseren Verständnis der Erfindung dienen sollen, und diese nicht einschränken sollen. Der Fachmann erkennt auch sofort, dass viele verschiedene Kombinationen von Hardware, Software und Firmware zur Ausführung der vorliegenden Erfindung verwendet werden können. Deshalb wird der wahre Umfang der Erfindung durch die folgenden Ansprüche gekennzeichnet.

## Patentansprüche

1. Durchlaufmaschine umfassend
eine Steuereinheit (C; C1, C2,..., Cn; CM) mit Zeitgeber (ZG) ausgebildet zum Ausgeben einer Systemzeit; und
mindestens zwei mit der Steuereinheit verbundene Maschineneinheiten (S11, A11) zum Empfangen der Systemzeit, wobei
die erste Maschineneinheit (S11) mindestens ein Sensorelement (SE11) umfasst und ausgebildet ist zum Erfassen eines Ereignisses und zum Ausgeben einer Ereigniszeit basierend auf der Systemzeit, die mit der Erfassung des Ereignisses in Beziehung steht, und
die zweite Maschineneinheit (A11) mindestens ein Aktorelement (AE11) umfasst und ausgebildet ist zum Durchführen eines Betriebs gemäß einer von der Steuereinheit vorgegebenen Bearbeitungszeit basierend auf der Systemzeit und der Ereigniszeit,
wobei die erste Maschineneinheit ausgebildet ist, als Ereignis ein Objekt auf einer Fördereinrichtung zu erfassen.

2. Durchlaufmaschine nach Anspruch 1, wobei die erste Maschineneinheit (S11) ausgebildet ist das Ereignis mit der auf der Systemzeit basierenden Ereigniszeit als Erfassungssignal an die Steuereinheit (C; C1, C2,..., Cn; CM) auszugeben.

3. Durchlaufmaschine nach Anspruch 1 oder 2, wobei die Steuereinheit (C; C1, C2,..., Cn; CM) ausgebildet ist, basierend auf der Ereigniszeit, die Bearbeitungszeit zu berechnen.

4. Durchlaufmaschine nach Anspruch 1, 2 oder 3, wobei die Steuereinheit (C; C1, C2,..., Cn; CM) ausgebildet ist, die Bearbeitungszeit als Bearbeitungssignal an die zweite Maschineneinheit (A11) auszugeben.

5. Durchlaufmaschine nach Anspruch 1, 2 oder 3, ferner umfassend
eine dritte Maschineneinheit (S12) mit einem zweiten Sensorelement, und
eine vierte Maschineneinheit (A12) mit einem zweiten Aktorelement, wobei
die dritte und vierte Maschineneinheit ausgebildet sind, die Systemzeit von der Steuereinheit zu empfangen, und die Steuereinheit (C; C1, C2,..., Cn; CM) ausgebildet ist, basierend auf dem Ereignis und der Ereigniszeit, die Maschineneinheit mit Aktorelement (A11, A12) auszuwählen, der die Bearbeitungszeit mitzuteilen ist.

6. Durchlaufmaschine nach einem der Ansprüche 1 bis 5, wobei die erste und zweite Maschineneinheit (S11, A11) ein Bearbeitungsaggregat (310) bilden.

7. Durchlaufmaschine nach Anspruch 6, wobei das Bearbeitungsaggregat (310) eine Aggregatsteuereinheit (C; C1, ..., Cn) umfasst.

8. Durchlaufmaschine nach Anspruch 7, wobei die Aggregatsteuereinheit (C1,... , Cn) ausgebildet ist mit der Steuereinheit (CM) über ein Bussystem zu kommunizieren und über das Bussystem die Systemzeit zu empfangen.

9. Durchlaufmaschine nach einem der Ansprüche 1 bis 8, wobei die Steuereinheit zum Synchronisieren der Maschineneinheiten (S11, A11, S12, A12) ausgebildet ist.

10. Durchlaufmaschine nach einem der Ansprüche 1 bis 9, wobei die erste Maschineneinheit (S11) einen ersten Speicher umfasst zum Speichern von Ereignissen und Ereigniszeiten.

11. Durchlaufmaschine nach einem der Ansprüche 1 bis 10, wobei die zweite Maschineneinheit (A11) einen zweiten Speicher umfasst zum Speichern von Bearbeitungszeiten und/oder Sollwertdaten für die entsprechende Bearbeitung.

12. Durchlaufmaschine nach einem der Ansprüche 1 bis 11, wobei die Systemzeit der realen Weltzeit entspricht.

13. Durchlaufmaschine nach einem der Ansprüche 1 bis 12, ferner umfassend einen Objektsensor (S) zum Erfassen eines Objekts (O1,...,On) auf einer Fördereinrichtung (320) und zum Ausgeben eines Objekt-Erfassungssignals enthaltend eine Objekt-Erfassungszeit basierend auf der Systemzeit.

14. Durchlaufmaschine nach einem der Ansprüche 1 bis 13, ferner umfassend einen Lagegeber (G) zum Ausgeben eines Messsignals entsprechend einer Messung einer Position einer Fördereinrichtung (320) an die Steuereinheit, wobei das Messsignal eine Messzeit basierend auf der Systemzeit enthält, die mit der Messung in Beziehung steht.

15. Durchlaufmaschine nach Anspruch 13 oder 14, wobei die Steuereinheit ausgebildet ist eine Position eines Objekts auf der Fördereinrichtung zu unterschiedlichen Zeiten zu berechen durch Verwendung des Messsignals und des Erfassungssignals oder des Objekt-Erfassungssignals.

16. Bearbeitungsverfahren für eine Durchlaufmaschine umfassend
Ausgeben einer definierten Systemzeit von einer Steuereinheit mit Zeitgeber an mindestens zwei Maschineneinheiten,
Erfassen eines Ereignisses mit der ersten Maschineneinheit,
Ausgeben einer Ereigniszeit basierend auf der Systemzeit, die mit der Erfassung des Ereignisses in Beziehung steht, von der ersten Maschineneinheit an die Steuereinheit, und
Durchführen eines Betriebs gemäß einer von der Steuereinheit vorgegebenen Bearbeitungszeit basierend auf der Systemzeit und der Ereigniszeit durch die zweite Maschineneinheit,
wobei das Ereignis bei der ersten Maschineneinheit durch ein Objekt auf einer Fördereinrichtung ausgelöst wird.

17. Bearbeitungsverfahren nach Anspruch 16, ferner umfassend
Berechnen durch die Steuereinheit (C; C1, C2,, Cn; CM) der Bearbeitungszeit basierend auf der Ereigniszeit und der Systemzeit.

18. Bearbeitungsverfahren nach Anspruch 16 oder 17, ferner umfassend
Ausgeben der Bearbeitungszeit als Bearbeitungssignal von der Steuereinheit an die zweite Maschineneinheit (A11).

## Claims

1. Continuous-throughput machine comprising
a control unit (C; C1, C2, ..., Cn; CM) with timer (ZG) designed to output a system time; and
at least two machine units S11, A11) connected to the control unit for receiving the system time, wherein
the first machine unit (S11) comprises at least one sensor element (SE11) and is designed to detect an event and to output an event time on the basis of the system time, which is correlated with detection of the event, and
the second machine unit (A11) comprises at least one actuator element (AE11) and is designed to perform operation in accordance with a processing time predetermined by the control unit on the basis of the system time and the event time,
wherein the first machine unit is designed to detect an object on a conveying device as an event.

2. Continuous-throughput machine according to claim 1, wherein the first machine unit (S11) is designed to output the event with the event time based on the system time as a detection signal to the control unit (C; C1, C2, ..., Cn; CM).

3. Continuous-throughput machine according to claim 1 or 2, wherein the control unit (C; C1, C2, ..., Cn; CM) is designed to calculate the processing time on the basis of the event time.

4. Continuous-throughput machine according to claim 1, 2 or 3, wherein the control unit (C; C1, C2, ..., Cn; CM) is designed to output the processing time as a processing signal to the second machine unit (A11).

5. Continuous-throughput machine according to claim 1, 2 or 3, further comprising
a third machine unit (S12) with a second sensor element, and
a fourth machine unit (A12) with a second actuator element, wherein
the third and fourth machine units are designed to receive the system time from the control unit, and the control unit (C; C1, C2, ..., Cn; CM) is designed, on the basis of the event and the event time, to select the machine unit with actuator element (A11, A12) to which the processing time is to be conveyed.

6. Continuous-throughput machine according to any of claims 1 to 5, wherein the first and second machine units (S11, A11) form a processing assembly (310).

7. Continuous-throughput machine according to claim 6, wherein the processing assembly (310) comprises an assembly control unit (C; C1, ..., Cn).

8. Continuous-throughput machine according to claim 7, wherein the assembly control unit (C1, ..., Cn) is designed to communicate with the control unit (CM) via a bus system and to receive the system time via the bus system.

9. Continuous-throughput machine according to any of claims 1 to 8, wherein the control unit is designed to synchronise the machine units (S11, A11, S12, A12).

10. Continuous-throughput machine according to any of claims 1 to 9, wherein the first machine unit (S11) comprises a fist memory for the storage of events and event times.

11. Continuous-throughput machine according to any of claims 1 to 10, wherein the second machine unit (A11) comprises a second memory for the storage of processing times and/or nominal values for the corresponding processing.

12. Continuous-throughput machine according to any of claims 1 to 11, wherein the system time corresponds to the actual universal time.

13. Continuous-throughput machine according to any of claims 1 to 12, further comprising an object sensor (S) for detecting an object 01, ..., On) on a conveying device (320) and for outputting an object detection signal containing an object detection time on the basis of the system time.

14. Continuous-throughput machine according to any of claims 1 to 13, further comprising a position sensor (G) for outputting a measurement signal corresponding to a measurement of a position of a conveying device (320) to the control unit, wherein the measurement signal contains a measurement time on the basis of the system time, which is correlated with the measurement.

15. Continuous-throughput machine according to claim 13 or 14, wherein the control unit is designed to calculate a position of an object on the conveying device at different times by using the measurement signal and the detection signal or the object detection signal.

16. Processing method for a continuous-throughput machine comprising
outputting a predefined system time from a control unit with timer to at least two machine units,
detecting an event with the first machine unit,
outputting an event time on the basis of the system time, which is correlated with detection of the event, from the first machine unit to the control unit, and
performance of operation in accordance with a processing time predetermined by the control unit on the basis of the system time and the event time by the second machine unit,
wherein the event is triggered at the first machine unit by an object on a conveying device.

17. Processing method according to claim 16, further comprising
calculation by the control unit (C; C1, C2, ..., Cn; CM) of the processing time on the basis of the event time and the system time.

18. Processing method according to claim 16 or 17, further comprising
outputting the processing time as a processing signal from the control unit to the second machine unit (A11).

## Revendications

1. Machine opérant en continu comprenant
une unité de commande (C ; C1, C2, ..., Cn ; CM) avec temporisateur (ZG) réalisée pour transmettre un temps système ; et
au moins deux unités de machine (S11, A11) reliées à l'unité de commande pour la réception du temps système,
la première unité de machine (S11) comprenant au moins un élément de détection (SE11) et étant réalisée afin de détecter un évènement et de transmettre un temps d'évènement en se basant sur le temps système qui se trouve en rapport avec la détection de l'évènement, et
la seconde unité machine (A11) comprenant au moins un élément acteur (AE11) et étant réalisée afin de réaliser un fonctionnement selon un temps de traitement prescrit par l'unité de commande en se basant sur le temps système et le temps d'évènement, la première unité de machine étant réalisée afin de détecter comme évènement un objet sur un dispositif de transport.

2. Machine opérant en continu selon la revendication 1, la première unité de machine (S11) étant réalisée afin de transmettre l'évènement avec le temps d'évènement se basant sur le temps système comme un signal de détection à l'unité de commande (C ; C1, C2, ..., Cn ; CM).

3. Machine opérant en continu selon la revendication 1 ou 2, l'unité de commande (C ; C1, C2, ..., Cn ; CM) étant réalisée afin de calculer le temps de traitement en se basant sur le temps d'évènement.

4. Machine opérant en continu selon la revendication 1, 2 ou 3, l'unité de commande (C ; C1, C2, ..., Cn ; CM) étant réalisée afin de transmettre le temps de traitement comme signal de traitement à la seconde unité de machine (A11).

5. Machine opérant en continu selon la revendication 1, 2 ou 3, comprenant de plus une troisième unité de machine (S 12) avec un second élément de détection, et
une quatrième unité de machine (A12) avec un second élément acteur,
les troisième et quatrième unités de machine étant réalisées afin de recevoir le temps système de l'unité de commande, et l'unité de commande (C ; C1, C2, ..., Cn ; CM) étant réalisée afin de sélectionner, en se basant sur l'évènement et le temps d'évènement, l'unité de machine avec l'élément acteur (A11, A12) à laquelle doit être communiqué le temps de traitement.

6. Machine opérant en continu selon l'une quelconque des revendications 1 à 5, la première et la seconde unités de machine (S11, A11) formant un ensemble de traitement (310).

7. Machine opérant en continu selon la revendication 6, l'ensemble de traitement (310) comportant une unité de commande d'ensemble (C ; C1, ..., Cn).

8. Machine opérant en continu selon la revendication 7, l'unité de commande d'ensemble (C1, ..., Cn) étant réalisée afin de communiquer avec l'unité de commande (CM) par un système de bus et de recevoir le temps système par le système de bus.

9. Machine opérant en continu selon l'une quelconque des revendications 1 à 8, l'unité de commande étant réalisée pour la synchronisation des unités de machine (S11, A11, S12, A12).

10. Machine opérant en continu selon l'une quelconque des revendications 1 à 9, la première unité de machine (S11) comportant une première mémoire pour l'enregistrement d'évènements et de temps d'événement.

11. Machine opérant en continu selon l'une quelconque des revendications 1 à 10, la seconde unité de machine (A11) comportant une seconde mémoire pour l'enregistrement de temps de traitement et/ou de données de valeur de consigne pour le traitement correspondant.

12. Machine opérant en continu selon l'une quelconque des revendications 1 à 11, le temps système correspondant au temps universel réel.

13. Machine opérant en continu selon l'une quelconque des revendications 1 à 12, comprenant de plus un capteur d'objet (S) pour la détection d'un objet (O1, ..., On) sur un dispositif de transport (320) et pour la transmission d'un signal de détection d'objet contenant un temps de détection d'objet en se basant sur le temps système.

14. Machine opérant en continu selon l'une quelconque des revendications 1 à 13, comprenant de plus un détecteur de position (G) pour la transmission d'un signal de mesure correspondant à une mesure d'une position d'un dispositif de transport (320) à l'unité de commande, le signal de mesure contenant un temps de mesure se basant sur le temps système qui est en rapport avec la mesure.

15. Machine opérant en continu selon la revendication 13 ou 14, l'unité de commande étant réalisée afin de calculer une position d'un objet sur le dispositif de transport à différents moments par l'utilisation du signal de mesure et du signal de détection ou du signal de détection d'objet.

16. Procédé de traitement pour une machine opérant en continu comprenant
la transmission d'un temps système défini d'une unité de commande avec temporisateur à au moins deux unités de machine,
la détection d'un évènement avec la première unité de machine,
la transmission d'un temps d'évènement en se basant sur le temps système qui se trouve en rapport avec la détection de l'évènement, de la première unité de machine à l'unité de commande, et
la réalisation d'un fonctionnement selon un temps de traitement prescrit par l'unité de commande en se basant sur le temps système et le temps évènement par la seconde unité de machine,
l'évènement étant déclenché pour la première unité de machine par un objet sur un dispositif de transport.

17. Procédé de traitement selon la revendication 16, comprenant de plus le calcul par l'unité de commande (C ; C1, C2, ..., Cn ; CM) du temps de traitement en se basant sur le temps d'évènement et le temps système.

18. Procédé de traitement selon la revendication 16 ou 17, comprenant de plus la transmission du temps de traitement comme signal de traitement de l'unité de commande à la seconde unité de machine (A11).
